Europäisches Patentamt

**European Patent Office**

Office européen des brevets

(19)

(11) Numéro de publication: **0 094 296**
**B1**

(12)

# FASCICULE DE BREVET EUROPEEN

(45) Date de publication du fascicule du brevet:
**18.12.85**

(51) Int. Cl.⁴: **F 02 K 3/075**, F 01 D 17/16

(21) Numéro de dépôt: **83400878.1**

(22) Date de dépôt: **03.05.83**

(54) **Dispositif de réglage de la perte de charge d'au moins un des flux dans un turboréacteur multiflux.**

(30) Priorité: **04.05.82 FR 8207692**

(43) Date de publication de la demande:
**16.11.83 Bulletin 83/46**

(45) Mention de la délivrance du brevet:
**18.12.85 Bulletin 85/51**

(84) Etats contractants désignés:
**DE FR GB SE**

(56) Documents cités:
**DE - B - 3 029 001**
**FR - A - 995 131**
**FR - A - 1 072 779**
**FR - A - 1 169 823**
**FR - A - 2 085 470**
**FR - A - 2 123 831**
**FR - A - 2 168 035**
**FR - A - 2 315 664**
**FR - A - 2 353 776**
**FR - A - 2 424 999**
**FR - A - 2 445 438**
**GB - A - 1 099 677**
**US - A - 2 934 895**
**US - A - 3 972 349**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Bouiller, Jean Georges, 10, rue Kléber, F-91800 Brunoy (FR)**
Inventeur: **Buisson, Marc François Bernard, 120 av. des Charmettes, F-77350 Le Mee sur Seine (FR)**
Inventeur: **Jourdain, Gérard Ernest André, 4, Résidence l'Arcadie Saintry s/Seine, F-91100 Corbeil Essonnes (FR)**
Inventeur: **Sandelis, Denis Jean Maurice, 1, allée A. Dubois, F-77370 Nangis (FR)**
Inventeur: **Urruty, Yves Robert Alfred, 24, rue Lavoisier, F-77000 Melun (FR)**

(74) Mandataire: **Moinat, François, S.N.E.C.M.A. Service des Brevets Boîte Postale 81, F-91003 Evry Cedex (FR)**

## Description

L'invention concerne un dispositif de réglage de la perte de charge d'au moins un des flux dans un turboréacteur multiflux, le dispositif comportant un étage d'aubes à calage variable disposé dans le canal secondaire annulaire entourant le canal primaire, un anneau de commande des aubes, des moyens de liaison entre l'anneau de commande et les aubes et des moyens de commande de rotation de l'anneau.

La nécessité de régler la perte de charge du flux d'air secondaire dans un turboréacteur multiflux s'est fait sentir pour l'optimisation des conditions de vol et a pour but d'ajuster, d'une façon permanente, le rapport des débits du flux primaire et secondaire aux conditions de vol rencontrées. Cet ajustement du taux de dilution favorise la création d'un mélange homogène des deux flux et permet un fonctionnement satisfaisant de la postcombustion, aussi bien dans des conditions de vols subsoniques que supersoniques.

On connaît, par exemple, du brevet français N° 995131 des moyens susceptibles d'agir sur le flux secondaire par des volets obturateurs disposés dans le canal secondaire et permettant de réduire le taux de dilution sans variation notable des vitesses de rotation des organes mécaniques.

Le brevet français N° 2445438 décrit un mécanisme d'actionnement d'aubes d'obturation dans lequel les aubes sont disposées dans le canal secondaire et pivotent autour d'axes tourillonnant dans des paliers portés par les parois intérieure et extérieure du canal secondaire. L'axe traversant la paroi supérieure est fixé à une extrémité d'un levier dont l'autre extrémité tourne dans une chape solidaire d'un anneau. Un vérin déplace l'anneau en rotation entraînant ainsi la rotation des aubes et l'obturation plus ou moins complète du canal. Les buts recherchés par la modification de la perte de charge du canal utilisant ce mécanisme sont d'assister le démarrage à l'air du moteur, de réduire le niveau de poussée au ralenti au sol et de réduire le flux secondaire dans les conditions de ralenti.

On connaît également par le brevet FR-A N° 2315664 une application particulière dans laquelle, en vue d'uniformiser le flux d'air alimentant une chambre de combustion, des pales orientables sont disposées radialement en amont de l'admission d'air primaire dans un canal annulaire de circulation formé entre les cloisons interne et externe de ladite chambre. En fonction des résultats recherchés, en particulier la modification de l'angle d'écoulement du flux d'air, diverses positions possibles des pales sont schématiquement indiquées, la manœuvre des pales pouvant être prévue par groupes.

L'invention concerne un dispositif de réglage de perte de charge également par volets disposés dans le flux secondaire et dont l'inclinaison peut être réglée en fonction des conditions de vol; elle a pour but de diminuer le taux de dilution aux conditions de vol à nombre de Mach élevé, de réduire en aval ou au moins de stabiliser la vitesse de l'écoulement dans la veine secondaire, afin d'éviter de perturber la stabilité de la flamme sur les accroche-flammes du système de réchauffe, d'augmenter en amont la pression dans le canal secondaire et donc d'augmenter le rapport de pression dans le compresseur haute pression, pour faciliter l'accélération, en régime aérodynamique réduit, jusqu'au régime supersonique et influencer favorablement les problèmes de pompage du compresseur.

Le dispositif selon l'invention présente par rapport aux systèmes connus une grande simplicité de construction, tout en évitant une rotation du flux. La disposition des aubes et le sens de rotation de deux aubes voisines permettent un équilibrage des efforts aérodynamiques facilitant la commande et l'utilisation d'un système de commande d'encombrement réduit.

Les explications et figures données ci-après à titre d'exemple permettront de comprendre comment l'invention peut être réalisée.

La fig. 1 est une vue schématique en coupe axiale d'un turboréacteur multiflux sur laquelle est représentée la zone d'implantation du dispositif selon l'invention.

La fig. 2 est une vue radiale suivant II de la fig. 3 de l'extérieur vers l'intérieur d'une première forme de réalisation du dispositif de réglage selon l'invention.

La fig. 3 est une vue selon III-III de la fig. 2.

La fig. 4 est une vue radiale suivant IV de la fig. 5 de l'extérieur vers l'intérieur d'une deuxième forme de réalisation du dispositif de réglage selon l'invention.

La fig. 5 est une vue en coupe selon V-V de la fig. 4.

La fig. 6 est une vue en coupe radiale selon VI-VI de la fig. 7 d'une partie du turboréacteur montrant une couronne d'aubes réglables selon une troisième forme de réalisation du dispositif de réglage selon l'invention.

Les fig. 7 et 8 sont des vues selon VII-VII et VIII-VIII de la fig. 6.

Les fig. 9 et 10 sont des vues selon IX-IX de la fig. 7 pour les aubes en position ouverte et fermée.

La fig. 11 est une vue en perspective d'un exemple de commande du dispositif selon les fig. 6 à 10.

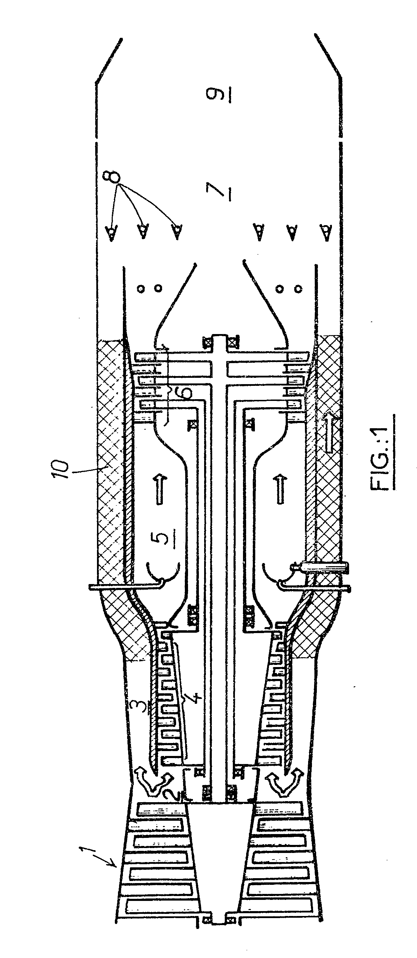

La fig. 1 est une vue en coupe axiale d'un turboréacteur double flux avec à la fois postcombustion derrière la turbine et réchauffe du flux froid, et susceptible d'être équipé d'un dispositif de réglage de perte de charge conforme à l'invention.

Le turboréacteur comporte classiquement une soufflante 1 qui alimente en air comprimé les canaux primaire 2 et secondaire 3. Le flux empruntant le canal primaire 2 passe par les étages compresseurs moyenne et haute pression 4, la chambre de combustion 5, les turbines haute et basse pression 6, la chambre de postcombustion 7 dans laquelle sont disposés les injecteurs de postcombustion 8, et la tuyère d'éjection 9. Le flux empruntant le canal secondaire 3, coaxial au canal primaire 2, arrive en amont de certains des injecteurs 8 dans la chambre de postcombustion et permet l'homogénéisation des gaz de combustion provenant du canal primaire par dilution avec l'air secondaire et assure une composition optimale du mélange de postcombustion et une dilution suffisante des gaz éjectés.

Afin d'obtenir ces avantages par le réglage de la perte de charge du flux d'air secondaire, le dispositif de réglage devra, de préférence, être placé dans une zone 10 du canal secondaire représenté en hachure, s'étendant approximativement entre le dernier étage du compresseur haute pression et le dernier étage de la turbine moyenne en basse pression.

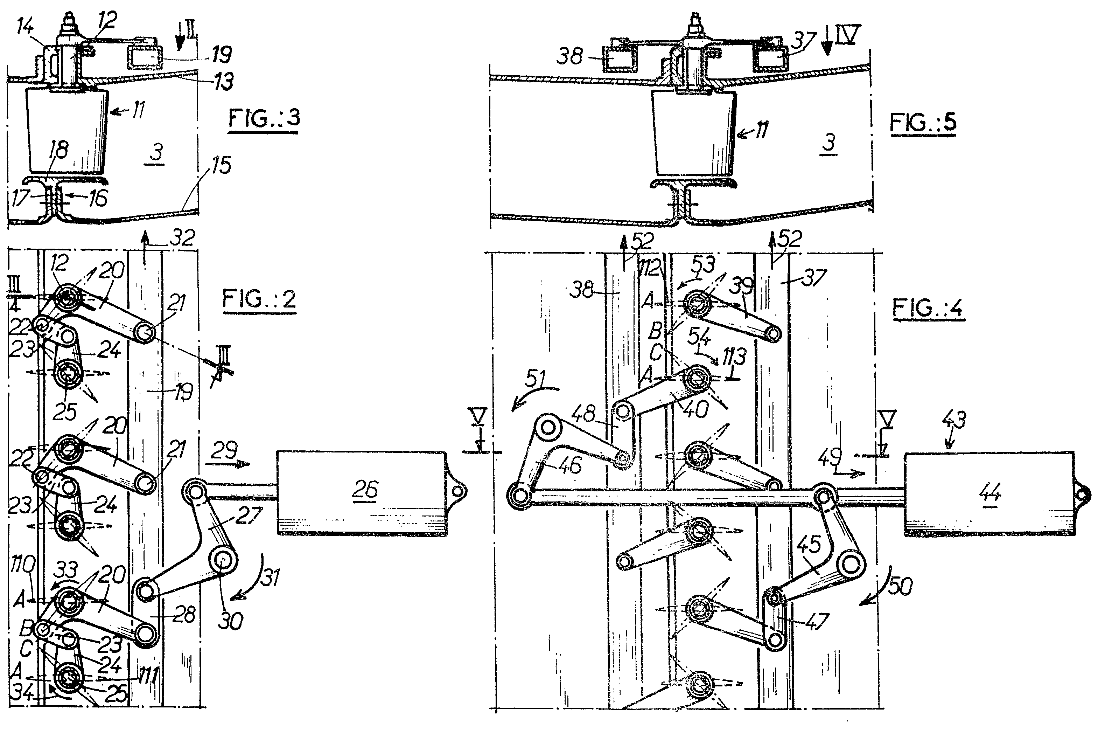

Les fig. 2 et 3 montrent respectivement, vue radialement en projection plane et en coupe axiale, une première forme de réalisation d'un dispositif de réglage de la perte de charge du flux d'air secondaire.

Le dispositif comporte un étage d'aubes 11 à calage variable.

Les aubes portent, selon leur axe de symétrie longitudinal, un pivot 12 qui traverse la paroi extérieure 13 du canal secondaire 3 par un palier 14. Selon un exemple de réalisation de l'aube montrée sur la fig. 3, la pale d'aube n'occupe pas toute la hauteur du canal qui comporte, sur la paroi intérieure 15, un dispositif de perte de charge fixe 16 constitué d'un anneau 17 portant une collerette cylindrique 18. Un anneau de commande 19, concentrique extérieurement au canal secondaire 3, coopère avec les aubes par l'intermédiaire de moyens de liaison formés d'un ensemble de leviers comportant un levier coudé 20, à bras inégaux, fixé, à l'intersection de ses bras, au pivot 12 d'une première aube. L'extrémité 21 du bras le plus long est articulée sur l'anneau 19 et celle 22 du bras le plus court, à une extrémité d'une biellette 23. L'autre extrémité de la biellette est articulée à l'extrémité d'un levier droit 24 fixé au pivot 25 d'une deuxième aube, voisine de la première.

L'anneau 19 est déplacé circonférentiellement par des moyens de commande de rotation constitués, par exemple, d'un vérin 26, d'un levier coudé 27 et d'une biellette 28.

Le fonctionnement du dispositif est le suivant: la rétraction de la tige du vérin dans la direction de la flèche 29 fait tourner le levier coudé 27 autour de son axe fixe 30 dans le sens de la flèche 31, en entraînant le déplacement de l'anneau 19 dans le sens de la flèche 32. L'anneau entraîne l'extrémité du levier coudé 20 qui tourne dans le sens de la flèche 33 en entraînant la pale d'aube 110 de la position A à la position B (pour simplifier, les aubes et leur pale portent la même référence).

L'extrémité du levier coudé 20 fait tourner, par l'intermédiaire de la biellette 23, le levier droit 24 fixé à l'aube voisine dans le sens de la flèche 34, opposé à celui du levier coudé 20, et amène la pale d'aube 111 de la position A à la position C. Les pales 110, 111 d'une paire d'aubes tournent symétriquement par rapport à la direction axiale en diminuant le passage défini par le bord des pales, de manière que le flux d'air secondaire continue à s'écouler axialement quel que soit le degré de fermeture, celle-ci pouvant aller jusqu'à la fermeture complète.

Les fig. 4 et 5 montrent un deuxième exemple de réalisation d'un dispositif selon l'invention. Les éléments semblables à ceux de l'exemple précédent portent les mêmes références.

Le dispositif comporte deux anneaux de commande 37, 38 concentriques extérieurement au canal secondaire 3. Des leviers droits 39, 40 constituent les moyens de liaison entre les pivots d'aubes et les anneaux disposés en aval et en amont de ceux-ci. Une aube 112 sur deux est reliée au premier anneau 37, la deuxième aube 113 étant reliée au deuxième anneau 38. Les leviers droits 39, 40 sont fixés par une de leurs extrémités aux pivots des aubes 112, 113 , les autres extrémités étant articulées sur les anneaux. Un dispositif de commande 43, comportant un dispositif de déplacement longitudinal, par exemple un vérin 44, et deux leviers coudés 45, 46 permet le réglage de l'orientation des aubes. Une des extrémités des leviers coudés 45, 46 est articulée sur la tige de vérin, l'autre extrémité est articulée par l'intermédiaire de biellettes 47, 48 aux anneaux. Lorsque la tige du vérin se déplace dans le sens de la flèche 49, les leviers coudés 45, 46 tournent respectivement dans le sens des flèches 50, 51, c'est-à-dire en sens inverse, en entraînant les anneaux 37 et 38 dans le sens des flèches 52. Les leviers droits 39 et 40, fixés aux pivots des aubes 112, 113, les entraînent dans le sens des flèches 53, 54 et les font passer, par exemple, de la position A à B et A à C. Comme dans l'exemple précédent, les aubes se déplacent symétriquement par rapport à la direction axiale du flux de manière à augmenter ou à diminuer le passage du flux d'air secondaire sans lui faire subir de déviation.

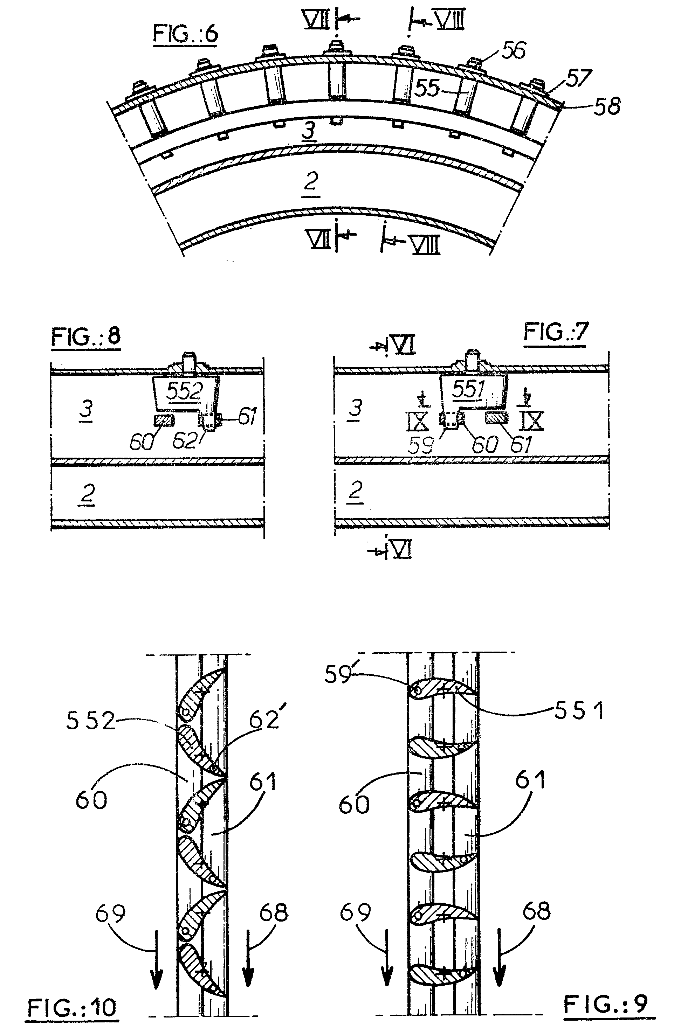

Les fig. 6 à 11 présentent une troisième forme de réalisation du dispositif.

Comme dans les exemples précédents, le dispositif se présente sous la forme d'une couronne d'aubes à calage variable (fig. 6) disposée dans le canal d'air secondaire 3. Les aubes 55 portent un pivot 56 de pied tourillonnant dans des paliers 57 fixés dans la paroi extérieure 58 du canal 3. Au moins deux axes 561, 562 traversent et font saillie à l'extérieur du canal. Leur rôle sera précisé ultérieurement. Dans l'exemple représenté, il n'a pas été prévu de dispositif fixe de perte de charge comme dans les exemples précédents: toutefois, un tel dispositif peut être envisagé.

Les aubes portent en tête, c'est-à-dire radialement vers l'intérieur un pivot 59 ou 62 (fig. 7, 8) excentré par rapport à l'axe de symétrie longitudinal de l'aube et placé alternativement en aval ou en amont par rapport à la direction du flux d'air secondaire. Ces pivots de tête constituent les moyens de liaison à deux anneaux 60 et 61 concentriques au canal secondaire 3 et disposés à l'intérieur de ce canal. Des paliers 59' ou 62' sont formés dans les anneaux à des distances correspondant au double de la distance séparant deux aubes, de manière que deux aubes voisines 551, 552 soient reliées, par exemple, respectivement à l'anneau amont 60 et à l'anneau aval 61.

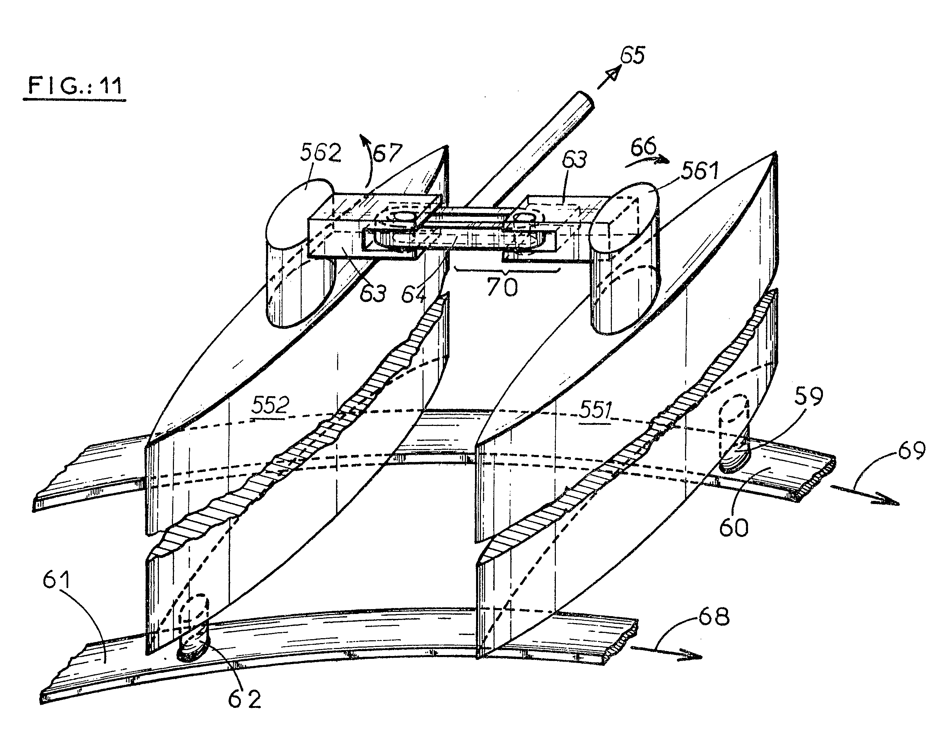

Les axes 561 et 562 faisant saillie à l'extérieur du canal secondaire sont reliés à un dispositif de commande 70 qui, selon un exemple de réalisation montré fig. 11, comporte deux étriers 63 dirigés l'un vers l'autre et fixés sur les axes 561, 562 qui sont les pivots de pied de deux aubes voisines et entre les branches desquelles est susceptible de coulisser une pièce de liaison 64. Cette pièce est solidaire d'un dispositif de déplacement, par exemple d'un vérin, non représenté, l'entraînant perpendiculairement à son axe longitudinal.

Lorsque la pièce de liaison 64 est déplacée dans le sens de la flèche 65, les axes 561 et 562 sont entraînés en rotation dans le sens des flèches 66 et 67. Les pales des deux aubes 551 et 552 tournent en sens inverse et leurs pivots de tête entraînent les anneaux 60 et 61 dans le même sens, comme montré par les flèches 68, 69 et, par voie de conséquence, la rotation de toutes les aubes de la couronne. La fig. 9 montre le dispositif lorsque les aubes sont en position ouverte, le plan des pales étant parallèle à la direction du flux d'air secondaire. La fig. 10 montre le dispositif en position fermée, les bords des pales étant l'un contre l'autre. Le passage de la position ouverte à la position fermée se fait comme dans les exemples précédents par rotation symétrique des aubes par rapport à la direction axiale. La rotation contraire de deux aubes voisines diminue le passage entre les pales, de manière que le flux secondaire continue à s'écouler axialement jusqu'à la fermeture complète.

Dans la solution représentée des fig. 6 à 11, il faut remarquer que par rapport à toutes les solutions de l'art antérieur et aux solutions faisant l'objet des fig. 1 à 5, l'encombrement du système d'ajustement du taux de dilution est pratiquement très petit vers l'extérieur, puisque les anneaux de commande sont dans le flux secondaire même. L'encombrement extérieur par rapport à une solution sans ajustement du taux de dilution est limité au seul vérin de commande, qui peut être placé périphériquement par exemple en une région où ce léger dépassement de l'encombrement n'est pas gênant.

Dans toutes les solutions représentées à titre d'exemples non limitatifs, on voit qu'on peut moduler d'une façon continue et progressive la perte de charge, donc le taux de dilution en fonction des conditions de vol – ou de charge du turboréacteur. Cette modulation peut se faire à partir d'une perte de charge très faible (correspondant à la traînée des aubes en drapeau, à laquelle s'ajoute dans la solution faisant l'objet des fig. 6 à 11 la traînée des deux anneaux 60 et 61, ce dernier étant du reste dans le sillage du premier), à une perte de charge forte, voire à l'obstruction complète du canal.

Il est enfin à remarquer que dans toutes les solutions décrites à titre d'exemples non limitatifs, d'une part, les axes de rotation des aubes se trouvent approximativement au milieu de la corde, les efforts de commande sont relativement faibles, d'autre part, la variation continue du taux de dilution s'effectue sans mise en rotation autour de l'axe du flux secondaire et même en cas de rotation résiduelle derrière la soufflante 1, le système sert partiellement d'étage redresseur, quelle que soit sa position. L'obtention d'un flux secondaire sans rotation est importante pour améliorer le fonctionnement de la chauffe du flux froid.

## Revendications

1. Dispositif de réglage de la perte de charge d'au moins un des flux dans un turboréacteur multiflux, ce dispositif comportant un étage d'aubes à calage variable disposé dans le canal secondaire annulaire entourant le canal primaire, un dispositif de commande des aubes, constitué par au moins un anneau, des moyens de liaison entre l'anneau de commande et les aubes et des moyens de commande de rotation de ce dispositif, caractérisé en ce que les moyens de liaison sont conformés pour appliquer à deux aubes voisines (110, 111; 112, 113; 551, 552) un mouvement de rotation en sens inverse, lors de la rotation du dispositif de commande (19; 37, 38; 60, 61).

2. Dispositif selon la revendication 1, caractérisé en ce que les moyens de liaison sont formés d'un ensemble de leviers comportant un levier coudé (20) fixé à l'intersection de ses deux bras au pivot (12) de pied d'une première aube (110), l'extrémité d'un bras étant articulée à l'anneau de commande (19) concentrique extérieurement au canal secondaire et l'extrémité du deuxième bras étant reliée par une biellette (23) mobile à une extrémité d'un levier droit (24) dont l'autre extrémité est fixée au pivot de pied (25) d'une deuxième aube (111) voisine de la première.

3. Dispositif selon la revendication 1, caractérisé en ce que le dispositif de commande comporte deux anneaux et en ce que les moyens de liaison relient une aube (112; 551) sur deux au premier anneau de commande (37; 60) et la deuxième aube (113; 552) au deuxième anneau de commande (38; 61).

4. Dispositif selon la revendication 3, caractérisé en ce que les moyens de liaison sont extérieurs au canal (3) et sont formés de leviers droits (39, 40) dont une extrémité est fixée au pivot de pied d'une aube (112, 113) et l'autre extrémité est articulée sur des anneaux de commande (37, 38), l'un étant situé en amont et l'autre en aval par rapport aux pivots de pied d'aube.

5. Dispositif selon la revendication 3, caractérisé en ce que les moyens de liaison sont formés par des pivots de tête d'aube (59, 62) excentrés par rapport à l'axe de symétrie longitudinal de l'aube disposés alternativement en amont et en aval du pivot de pied d'une aube à l'autre, lesdits pivots de tête coopérant alternativement avec un des deux anneaux de commande (60, 61), lesdits anneaux étant concentriques intérieurement au canal secondaire (3), et en ce que les moyens de commande (70) sont prévus sur deux pivots de pied d'aubes voisines.

6. Dispositif selon la revendication 5, caractérisé en ce que les anneaux de commande (60, 61) des aubes sont situés à l'intérieur de la veine secondaire et en ce que seuls les moyens de commande (70) dépassent localement de l'encombrement général de la veine et comportent deux étriers (63) dirigés l'un vers l'autre et fixés sur deux axes (561, 562) qui sont les pivots de pied de deux aubes voisines, une pièce de liaison (64) coulissant dans les deux étriers, un dispositif de déplacement entraînant la pièce de liaison perpendiculairement à son axe longitudinal.

7. Dispositif selon l'une des revendications précédentes, caractérisé en ce que la hauteur des aubes est inférieure à la hauteur du canal secondaire.

8. Dispositif selon la revendication 7, caractérisé en ce qu'un dispositif de perte de charge fixe (16) est prévu entre la tête d'aube et la paroi intérieure (15) du canal secondaire.

## Patentansprüche

1. Einrichtung zur Regelung des Druckgefälles über mindestens eine Strömung eines Mehrströmungs-Turbotriebwerks mit einer Schaufelstufe mit Schaufeln verstellbarer Neigung, die in dem den Primärkanal umgebenden ringförmigen Sekundärkanal angeordnet ist, mit einer von wenigstens einem Verstellring gebildeten Steuervorrichtung zur Verstellung der Schaufeln, mit zwischen dem verstellring und den Schaufeln angeordneten Verbindungsmitteln sowie mit Antriebsmitteln für das Drehen des Verstellrings, dadurch gekennzeichnet, dass die Verbindungsmittel derart ausgebildet sind, dass sie bei Drehung der Steuervorrichtung (19; 37, 38; 60, 61) zwei benachbarte Schaufeln (110, 111; 112, 113; 551, 552) mit einer Drehbewegung in gegenläufiger Richtung beaufschlagen.

2. Einrichtung nach Anspruch 1, dadurch gekennzeichnet, dass die Verbindungsmittel von einer Gruppe von Hebeln gebildet sind, die einen abgewinkelten Hebel (20) umfassen, der im Schnittpunkt seiner beiden Arme an dem Drehzapfen (12) des Fusses einer ersten Schaufel (110) befestigt ist, dass das Ende eines seiner Arme an dem Verstellring (19) angelenkt ist, der aussen koaxial zu dem Sekundärkanal (3) angeordnet ist, und dass das Ende des zweiten Arms über einen beweglichen Schwingarm (23) mit einem Ende eines geraden Hebels (24) verbunden ist, dessen anderes Ende an dem Drehzapfen (25) des Fusses einer zweiten, der ersten Schaufel benachbarten Schaufel (111) befestigt ist.

3. Einrichtung nach Anspruch 1, dadurch gekennzeichnet, dass die Steuervorrichtung zwei Verstellringe umfasst und dass die Verbindungsmittel jeweils eine Schaufel (112; 551) von zweien mit dem ersten Verstellring (37; 60) und die zweite Schaufel (113; 552) mit dem zweiten Verstellring (38; 61) verbinden.

4. Einrichtung nach Anspruch 3, dadurch gekennzeichnet, dass die Verbindungsmittel ausserhalb des Sekundärkanals (3) angeordnet und von geraden Hebeln (39, 40) gebildet sind, die mit einem Ende an dem Drehzapfen des Fusses einer Schaufel (112, 113) fixiert sind und deren anderes Ende an Verstellringen (27, 38) angelenkt ist, von denen der ene stromaufwärts und der andere stromabwärts der Drehzapfen der Schaufelfüsse liegen.

5. Einrichtung nach Anspruch 3, dadurch gekennzeichnet, dass die Verbindungsmittel von zur Längssymmetrieachse der Schaufel exzentrischen Schaufelkopfdrehzapfen (59, 62) gebildet sind, die von Schaufel zu Schaufel abwechselnd stromaufwärts bzw. stromabwärts des Drehzapfens des Schaufelfusses angeordnet sind, dass die genannten Schaufelkopfdrehzapfen abwechselnd mit einem der beiden Verstellringe (60, 61) zusammenwirken, die konzentrisch im Innern des Sekundärkanals (3) angeordnet sind, und dass die Antriebsmittel (70) an den Drehzapfen von zwei benachbarten Schaufelfüssen vorgesehen sind.

6. Einrichtung nach Anspruch 5, dadurch gekennzeichnet, dass die Verstellringe (60, 61) der Schaufeln im Innern des Sekundärstrahls liegen, dass lediglich die Antriebsmittel (70) lokal über den allgemeinen Raumbedarf des Strahls hinausgehen und zwei Bügel (63) umfassen, die gegeneinander gerichtet und an zwei Achsen (561, 562) befestigt sind, die die Drehzapfen der Füsse zwei benachbarter Schaufel darstellen, und dass ein in den beiden Bügeln gleitbares Verbindungsstück (64) sowie eine Verschiebungsvorrichtung vorgesehen sind, die das Verbindungsstück senkrecht zu seiner Längsachse antreibt.

7. Einrichtung nach einem der vorhergehenden Ansprüche, dadurch gekennzeichnet, dass die Höhe der Schaufeln kleiner ist als die Höhe des Sekundärkanals.

8. Einrichtung nach Anspruch 7, dadurch gekennzeichnet, dass zwischen dem Schaufelkopf und der Innenwandung (15) des Sekundärkanals eine Vorrichtung (16) zur Gewährleistung eines vorbestimmten festen Druckgefälles angeordnet ist.

## Claims

1. Arrangement for controlling the pressure drop in at least one of the flows in a multi-flow turbo jet, the arrangement comprising one stage of variable incidence blades exposed in the secondary annular duct surrounding the primary duct, a control device for the blades, constituted by at least one ring, connecting means between the control ring and the blades and rotation control means for this device, characterized in this that the connecting means are configured to applied to two adjacent blades (110, 111; 112, 113; 551, 552) a rotary motion in opposite senses, during rotation of the control device, (19; 37, 38; 60, 61).

2. Arrangement according to Claim 1, characterized in this that the connecting means are formed by an assembly of levers comprising a bell-crank leaver (20) secured at the intersection of its two arms to a pivot (12) of the root of a first blade (110), the end of one arm being pivoted to the control ring (19) externally concentric with the secondary duct and the end of the second arm being connected by a movable link (23) to one end of a straight lever (24) of which the other end is secured to the pivot of the root (25) of a second blade (111) adjacent to the first.

3. Arrangement according to Claim 1, characterized in this that the control device comprises two rings and in this that the connecting means connecting one blade (112; 551) in two to the first control ring (37; 60) and the second blade (113; 552) to the second control ring (38; 61).

4. Arrangement according to Claim 3, characterized in this that the connecting means are external to the duct (3) and are formed by straight levers (39, 40) of which one end is secured to the pivot at the root of one blade (112, 113) and the other end is pivoted on the control rings (37, 38), the one being disposed upstream and the other downstream in relation to the pivots of the blade root.

5. Arrangement according to Claim 3, characterized in this that the connecting means are formed by pivots at the head of the blade (59, 62) eccentric in relation to the longitudinal axis of symmetry of the blade disposed alternatively upstream and downstream of the pivot of the root of the blade to the other, the said head pivots cooperating alternatively with one of two control rings (60, 61), the said rings being internally concentric with the secondary duct (3), and in this that the control means (70) are provided on two root pivots of adjacent blades.

6. Arrangement according to Claim 5, characterized in this that the control rings (60, 61) of the blades are disposed within the secondary flow and in this that only the control means (70) extend locally from the general zone of the flow and comprise two stirrups (63) directed towards one another and secured to two pins (561, 562) which are root pivots of two adjacent blades, one connecting member (64) sliding in the two stirrups, one displacement device driving the connecting member perpendicularly to its longitudinal axis.

7. Arrangement according to one of the preceding claims, characterized in this that the height of the blades is less than the height of the secondary duct.

8. Arrangement according to Claim 7, characterized in this that a fixed pressure drop device (16) is provided between the head of the blade and the internal wall (15) of the secondary duct.

FIG.:1

FIG.:3

FIG.:5

FIG.:2

FIG.:4

0 094 296

FIG.:6

VII VIII

56
55
57
58
3
2

VII VIII

FIG.:8

FIG.:7

VI

552
3
61
60 62
2

551
3
IX
IX
59 60 61
2

VI

552
62'
60
61
69
68

59'
551
60
61
69
68

FIG.:10

FIG.:9

FIG.: 11

0 094 296